# EUROPÄISCHE PATENTSCHRIFT

(11) **EP 1 387 555 B1**
(45) Veröffentlichungstag und Bekanntmachung des Hinweises auf die Patenterteilung: **03.03.2010**
(21) Anmeldenummer: 03014991.8
(22) Anmeldetag: 02.07.2003
(51) Int. Cl.: H04M 3/493

(54) **Verfahren und Vorrichtung zum Übermitteln von Informationen über Kurzmitteilungen**
Method and system for transmitting information via SMS
Procédé et dispositif de transmission des informations via un service de messages courts

(30) Priorität: 31.07.2002 DE 10234836
(43) Veröffentlichungstag der Anmeldung: 04.02.2004
(73) Patentinhaber: Deutsche Telekom AG, 53113 Bonn (DE)
(72) Erfinder: Kiesenbauer, Jürgen, Dipl.-Ing., 64295 Darmstadt (DE); Mehler, Christoph, Dipl.-Ing., 64367 Mühltal (DE)

(56) Entgegenhaltungen:
- EP-A- 1 195 975
- WO-A-02/23878
- WO-A-02/052368
- US-A1- 2002 004 382
- US-B1- 6 404 884

## Beschreibung

Die Erfindung betrifft ein Verfahren zur Abfrage einer Rufnummer eines Telekommunikationsteilnehmers aus einer Auskunftsstelle in einem Telekommunikationsnetz gemäß dem Oberbegriff von Anspruch 1 und eine entsprechende Vorrichtung gemäß dem Oberbegriff von Anspruch 12.

Auskunftsstellen in Telekommunikationsnetzen sind beispielsweise herkömmliche Telefonauskünfte. Um die Rufnummer eines Teilnehmers an Telekommunikationsdiensten zu erfahren, kann man bei einer Telefonauskunft anrufen und die Rufnummer erfragen. Diese wird dann in der Regel von einem Operator angesagt oder es wird vom Operator veranlasst, dass die Ansage der Rufnummer automatisch angesagt wird. Der Operator sucht hierzu in einer Datenbank oder einem Telefonbuch nach der erfragten Rufnummer.

Es gibt auch automatische, sprachgesteuerte Auskünfte. Hierzu ruft man bei einem Sprachcomputer an und buchstabiert diesem den Namen eines Teilnehmers, um dessen Rufnummer zu erfahren. Der Sprachcomputer sucht dann die erfragte Rufnummer in einer Datenbank, sobald er den buchstabierten Namen erkannt hat.

In beiden Fällen, also bei der Operator- und der automatischen Auskunft wird die Rufnummer akustisch mitgeteilt. Es ist auch möglich, dass man sich nach der Auskunft mit dieser Rufnummer verbinden, also weitervermitteln lässt.

Nachteilig an den oben genannten Verfahren ist jedoch, dass sich ein Benutzer der Auskunftsstelle in der Regel die erfragte Rufnummer merken oder gar notieren muss. Vergisst er sie, muss er erneut bei der Auskunft anrufen und die Rufnummer erfragen. Wird er nach der Auskunft an die erfragte Rufnummer nach einer Rufnummernansage weitervermittelt und ist diese besetzt oder meldet sich dort niemand, muss er die Auskunft in der Regel ebenfalls nochmals anrufen, um die Rufnummer zu erfahren, wenn er sich diese nicht gemerkt oder vorher notiert hat. Auch in Fällen, in denen ein Benutzer von unterwegs mit dem Mobiltelefon die Auskunft anruft, hat er häufig keine Möglichkeit, die erfragte Rufnummer zu notieren.

Die oben genannten Verfahren zur Abfrage einer Rufnummer eines Teilnehmers aus einer Auskunftsstelle als auch die daraus resultierenden Nachteile sind in der US 2002/0004382 A1 beschrieben. Um beispielsweise im Falle einer Weitervermittlung an eine besetzte Rufnummer ein erneutes Anrufen der Auskunftsstelle zu vermeiden, schlägt die US 2002/0004382 A1 vor, dass die Verbindung zu der Auskunftsstelle, d. h. zu einem Operator, gehalten wird. Hierdurch kann eine erneute Rücksprache mit dem Operator gehalten werden, ohne dass eine Neuanwahl erforderlich ist.

Aufgabe der vorliegenden Erfindung ist es daher, ein Verfahren und eine Vorrichtung zur Abfrage einer Rufnummer eines Telekommunikationsteilnehmers aus einer Auskunftsstelle in einem Telekommunikationsnetz vorzuschlagen, bei welchen die vorgenannten Nachteile im wesentlichen vermieden werden. Insbesondere soll eine Auskunft komfortabler als bisher erfolgen.

Diese Aufgabe wird durch ein Verfahren zur Abfrage einer Rufnummer eines Telekommunikationsteilnehmers aus einer Auskunftsstelle in einem Telekommunikationsnetz mit den Merkmalen nach Anspruch 1 und durch eine entsprechende Vorrichtung mit den Merkmalen nach Anspruch 12 gelöst.

Ein wesentlicher Gedanke der Erfindung besteht darin, dass es in modernen Telekommunikationen möglich ist, Informationen elektronisch an Teilnehmer, d. h. an deren Kommunikationsendgeräte zu übermitteln. Dadurch kann die herkömmliche akustische Auskunft für Benutzer komfortabel ausgestaltet werden, da gewünschte Informationen elektronisch an Kommunikationsendgeräte übertragen werden können. Beispielsweise muss sich ein Benutzer nicht mehr erfragte Telefonnummern oder ganz allgemein Informationen der Auskunft merken oder notieren. Vielmehr können diese Informationen gemäß der Erfindung elektronisch als Kurzmitteilung übertragen werden.

Unter Kurzmitteilungen werden im Sinne der Erfindung alle in Telekommunikationsnetzen versendbaren Nachrichten verstanden, insbesondere die im Rahmen des Kurznachrichtendienstes (SMS: Short Message Service) und erweiterten Kurznachrichtendienstes (EMS: Enhanced Messaging Service) versendbaren Kurznachrichten in Textform, die im Rahmen des Multimedia-Nachrichtendienstes (MMS: Multimedia Messaging Service) versendbaren Multimedia-Kurznachrichten oder andere Nachrichtendienste wie i-Mode.

Aufgrund der großen Verbreitung von Mobiltelefonen, die in der Regel Kurzmitteilungen versenden und empfangen können, erleichtert die Erfindung einer großen Anzahl von Nutzern von Telekommunikationsdiensten die Handhabung der Auskunft. Zudem ist es mittlerweile auch möglich, in Festnetzen mit speziellen Kommunikationsendgeräten Kurzmitteilungen zu versenden und zu empfangen, beispielsweise im Telekommunikationsnetz der Deutschen Telekom AG, so dass die Erfindung nicht nur in einem Mobilfunknetz, sondern auch in einem Festnetz vorteilhaft genutzt werden kann. Da in absehbarer Zukunft mit einer weiteren Verbreitung von Kurzmitteilungsfähigen Endgeräten auszugehen ist, wird die Erfindung voraussichtlich auch für das Festnetz mehr und mehr an Bedeutung gewinnen. Im übrigen stellt die Erfindung einen Mehrwert zur herkömmlichen akustischen Auskunft in einem Telekommunikationsnetz dar und macht sie dadurch für Benutzer interessant.

Konkret betrifft die Erfindung ein Verfahren zur Abfrage einer Rufnummer eines Telekommunikationsteilnehmers aus einer Auskunftsstelle in einem Telekommunikationsnetz. Die Auskunftsstelle wird über ein Kommunikationsendgerät gerufen. Die Rufnummer wird erfindungsgemäß elektronisch als Kurzmitteilung übertragen, beispielsweise an das rufende Kommunikationsendgerät, wobei als Absender der Kurzmitteilung die Rufnummer des Inhabers des erfragten Teilnehmeranschlusses übertragen wird, insbesondere die Rufnummer eines Hauptanschlusses. Dies ermöglicht die Übernahme der Rufnummer per Tastendruck in eine elektronisches Telefonbuch beispielsweise eines Mobiltelefons.

Da nicht jeder Benutzer der Auskunftsstelle eine elektronische Übertragung der Rufnummer als Kurzmitteilung wünscht, wird in einer bevorzugten Ausführungsform des Verfahrens die Kurzmitteilung erst nach einer Signalisierung durch das Kommunikationsendgerät übertragen. Dies kann beispielsweise erfolgen, indem ein Benutzer nach einem Anruf bei der Auskunftsstelle und nach Ansage der gewünschten Rufnummer über die Tastatur eines Kommunikationsendgerätes einen bestimmten Kode eingibt, insbesondere eine bestimmte Ziffernfolge, durch welchen der Auskunftsstelle signalisiert wird, dass der Benutzer die erfragte Rufnummer als Kurzmitteilung erhalten will. Hierdurch kann ferner die Übermittlung als Kurzmitteilung gesondert in Rechnung gestellt werden, sozusagen als eine Art hochwertiger Zusatzdienst. Dieses Leistungsmerkmal kann optional angeboten werden. Es ist aber auch möglich, die Rufnummer jedem Anrufer automatisch zur Verfügung zu stellen (beispielsweise kostenlos), um auf den Vorteil einer derartigen Auskunft aufmerksam zu machen.

Insbesondere kann nun vorgegeben sein, dass die Kurzmitteilung an einen vorgegebenen Teilnehmeranschluss in einem Telekommunikationsnetz übertragen wird, vorzugsweise an ein mit dem Teilnehmeranschluss verbundenes Kommunikationsendgerät. Dies kann beispielsweise ein dem rufenden Teilnehmer zugeordneter Teilnehmeranschluss sein, der im Telekommunikationsnetz in einer Datenbank gespeichert ist und von der Auskunftsstelle erfragt werden kann. Die Kurzmitteilung kann also an beliebige Teilnehmeranschlüsse übertragen werden, d.h. sie muss nicht unbedingt an den Teilnehmeranschluss des Kommunikationsendgerätes übertragen werden, das die Auskunftsstelle ruft.

Denkbar wäre beispielsweise, dass ein registrierter Kunde eines Anbieters dieses Dienstes über ein Web-Interface auf seine Einstellungen für Telekommunikationsdienste, insbesondere die Einstellungen für die Auskunft, zugreifen und diese derart konfigurieren kann, dass er einen Teilnehmeranschluss angeben kann, an den die Kurzmitteilungen von der Auskunftsstelle übertragen werden. Beispielsweise kann er konfigurieren, dass Kurzmitteilungen der Auskunftsstelle an seinen Anschluss im Büro übermittelt werden, da sich dort ein Kurzmitteilungsfähiges Endgerät mit großer Speicherkapazität befindet. Weiter ist denkbar, dass Kurzmitteilungen zusätzlich oder auch alternativ zu einem vorgegebenen E-Mail Account gesendet werden.

Besonders einfach gestaltet sich die Übertragung der Kurzmitteilung bei einem Kommunikationsendgerät, das die Rufnummer bzw. Nummer des rufenden Teilnehmeranschlusses an die Auskunftsstelle überträgt. Dann kann die Auskunftsstelle eine Kurzmitteilung direkt an diese Nummer übertragen. Wenn die Auskunftsstelle über ein IN (Intelligentes Netz) angesteuert wird, bzw. die Auskunftsstelle Teil eines IN ist, wird die Rufnummer durch einen INAP Parameter übertragen und kann im IN ausgewertet werden.

In einer bevorzugten Ausführungsform kann eine Kurzmitteilung auch zentral gespeichert werden, um später vom Anrufer abgerufen werden zu können. Beispielsweise kann die zentrale Speicherung im Internet in eine Datenbank des Anrufers erfolgen, insbesondere einer Datenbank mit Adressen. Auch diese Art der Speicherung könnte beispielsweise über das oben erwähnte Web-Interface vom Anrufer selbst konfiguriert werden. Der Anrufer kann nach der Speicherung ähnlich einer Mailbox die gespeicherten Kurzmitteilungen über einen Computer, beispielsweise eine mit dem Internet verbunden PC abrufen. Oder er ruft die gespeicherten Kurzmitteilungen über ein mobiles Endgerät wie beispielsweise einen persönlichen digitalen Assistenten mit Internetzugang oder ein Mobiltelefon mittels WAP-Zugriff ab. Weiter könnte auch vorgesehen sein, dass diese Information auch als E-Mail gesendet wird. Hierzu könnte über den zuvor beschriebenen Administrationszugang zu den Einstellungen für Telekommunikationsdienste eine E-Mailadresse hinterlegt werden, an welche die Information übertragen werden kann.

Ist die Auskunftsstelle INAP-fähig, bzw. wird die Auskunftsstelle bevorzugt über ein IN angesteuert, empfängt sie bei jedem Anruf die Nummer des rufenden Teilnehmeranschlusses. In diesem Fall kann die empfangene Nummer ausgewertet werden, beispielsweise indem die Auskunftsstelle bzw. das IN anhand der Nummer feststellt, über welchen Ursprung (Festnetz oder Mobilnetz), Ursprungsbereich (06151, 089, 0171, 0172, ...) und/oder Anbieter von Telekommunikationsdiensten ein Anrufer anruft. Denkbar wäre dann, dass die Auskunftsstelle Kurzmitteilungen gemäß der Erfindung nur an bestimmte Anrufer übermittelt, insbesondere solche, die Kunden bei einem bestimmten Anbieter von Telekommunikationsdiensten sind. Als Beispiel sei hierzu angeführt, dass Kunden eines bestimmten Mobilfunkanbieters von der Auskunftsstelle anhand ihres Ursprungs identifiziert und für den Dienst gemäß der Erfindung freigeschaltet werden. Kunden anderer Mobilfunkanbieter werden dagegen von der Auskunftsstelle gesperrt.

Vorzugsweise wird die Rufnummer aus einer Datenbank mit Teilnehmern an Kommunikationsdiensten entnommen. Diese Datenbank kann eine Telekommunikationsnetz-Datenbank oder eine bestimmte Datenbank in einem Computernetzwerk, wie beispielsweise dem Internet sein. Bei einer Datenbank im Internet verfügt die Auskunftsstelle über einen Internet-Anschluss, über den sie die Daten abfragen kann.

Die Kurzmitteilung kann neben der Rufnummer auch den Namen des Telekommunikationsteilnehmers umfassen. Dies entspricht der klassischen Telefonauskunft. Es können aber auch weitere Informationen bereit gestellt werden, wie beispielsweise der Titel eines Teilnehmers, dessen Adresse und weitere Rufnummern von Teilnehmeranschlüssen, beispielsweise von einem Telefaxanschluss, einem Mobiltelefonanschluss, aber auch eine E-Mail-Adresse oder dergleichen Kommunikationsadressen.

Die Übertragung derartiger Informationen per Kurzmittelung kann von einem Parameter abhängig gemacht werden, um zu steuern, wer die Informationen empfangen kann und/oder darf. Dieser mit den Informationen in einer Datenbank gespeicherter Parameter kann beispielsweise derart vorgegeben sein, dass nur an bestimmte Teilnehmeranschlüsse die Informationen übertragen werden können. Der Parameter kann beispielsweise vom Inhaber der Informationen oder vom Anbieter eines Auskunftsdienstes eingestellt werden. Denkbar wäre beispielsweise, dass der Inhaber der Informationen diesen Parameter selbst durch einen Zugriff auf die Datenbank über das Internet einstellen kann, insbesondere über ein Web-Interface, das hierzu vom Dienstanbieter auf einer Internet-Seite für diesen Dienst angeboten werden kann. Somit kann vom Besitzer der Rufnummer erlaubt oder verboten werden, ob diese Funktion für seine Rufnummer genutzt werden darf, und die Auskunftsstelle kann entscheiden, ob das Ziel den Dienst nutzen darf oder nicht.

In einer bevorzugten Ausführungsform überträgt die Auskunftsstelle die Rufnummer und/oder weitere Informationen an eine Kurzmitteilungszentrale bzw. einen SMS-Server, die wiederum die Kurzmitteilung erstellt und an einen von der Auskunftsstelle vorgegebenen Teilnehmeranschluss überträgt.

Schließlich kann die Auskunftsstelle mit der Kurzmitteilung und zusätzliche, beliebige Informationen, vorzugsweise Werbeinformationen, übertragen. Dadurch ist es beispielsweise möglich, das Dienste gemäß der Erfindung werbefinanziert und damit kostenlos anzubieten.

Gemäß einem weiteren Aspekt betrifft die Erfindung eine Vorrichtung zur Abfrage einer Rufnummer eines Telekommunikationsteilnehmers aus einer Auskunftsstelle in einem Telekommunikationsnetz, die über ein Kommunikationsendgerät gerufen werden kann. Hierbei ist die Auskunftsstelle derart ausgebildet, dass sie die Rufnummer elektronisch als Kurzmitteilung überträgt.

Vorzugsweise ist die Auskunftsstelle INAP-fähig bzw. wird über ein IN angesteuert, um eingehende Rufe identifizieren zu können. Dadurch wird das Spektrum von Möglichkeiten, um das erfindungsgemäße Verfahren weiter ausgestalten zu können, vergrößert, beispielsweise indem Kunden bestimmter Anbieter von Telekommunikationsdiensten für das erfindungsgemäße Verfahren freigeschaltet und Kunden anderer Anbieter gesperrt werden.

Ferner kann die Auskunftsstelle ausgebildet sein, um eine Signalisierung durch das Kommunikationsendgerät derart verarbeiten zu können, dass die Kurzmitteilung übertragen wird. Wie bereits oben angesprochen, kann also von einem Anrufer über ein Kommunikationsendgerät gesteuert werden, ob eine Kurzmitteilung versandt werden soll.

Es kann auch vorgesehen sein, die Signalisierung zu speichern, um den Anrufer bei einem späteren Anruf nicht nochmals den Dialog bezüglich der Signalisierung anbieten zu müssen. Bei einem erneuten Anruf kann daher auf die gespeicherten Information zurückgegriffen werden. Beispielsweise kann hierzu die CgPA - Calling Party Address - in einer Datenbank abgefragt und geprüft werden, ob bereits Information dazu gespeichert ist, ob eine Signalisierung vom Anrufer bzw. Kunden bereits erfolgt ist und dieser eine dauerhafte Speicherung gewünscht hat.

In einer besonders bevorzugten Ausführungsform ist die Vorrichtung zum Lesen der Rufnummer aus einer Datenbank mit Teilnehmern an Telekommunikationsdiensten ausgebildet. Konkret bedeutet dies, dass die Vorrichtung eine Möglichkeit des Zugreifens auf eine Datenbank, zum Abfragen von Datensätzen aus dieser Datenbank und zum Verarbeiten dieser Datensätze besitzt. Vorzugsweise wird diese Funktionalität in Form einer Software in der Auskunftsstelle implementiert sein. Diese Software kann beispielsweise ein Modul einer Betriebssoftware der erfindungsgemäßen Vorrichtung, insbesondere der Auskunftsstelle sein. Das Modul ist vorzugsweise derart ausgebildet, das es den Zugriff auf Datenbanken steuert.

Vorzugsweise umfasst die Kurzmitteilung den Namen eines Inhabers eines Teilnehmeranschlusses und dessen Rufnummer. Weitere Informationen können ebenfalls bereit gestellt werden, wie beispielsweise der Titel eines Teilnehmers, dessen Adresse und weitere Teilnehmeranschlüsse und deren Rufnummern, die E-Mail-Adresse oder dergleichen Kontaktmöglichkeiten.

In einer bevorzugten Ausgestaltung umfasst die Auskunftsstelle eine Schnittstelle zum Kommunizieren mit einer Kurzmitteilungszentrale. Über diese Schnittstelle überträgt die Auskunftsstelle die Rufnummer an die Kurzmitteilungszentrale, die daraus eine Kurzmitteilung erstellt und an einen von der Auskunftsstelle vorgegebenen Teilnehmeranschluss überträgt. Die Schnittstelle kann beispielsweise als Software-Modul ausgebildet und Teil einer Betriebssoftware der Auskunftsstelle sein.

Vorzugsweise umfasst die Auskunftsstelle einen Auskunfts-Server, der beispielsweise in einem IN realisiert sein kann, insbesondere einen Computer mit einer Software zur Auskunft in Telekommunikationsnetzen. Der Auskunfts-Server kann automatisch Anrufe entgegen nehmen und Signalisierungen von Kommunikationsendgeräten auswerten, um Informationen elektronisch zu übermitteln. Denkbar wäre beispielsweise, dass der Auskunfts-Server bei einem Ruf eines Teilnehmers eine automatische Ansage abspielt mit Hinweisen zum Abfragen und Erhalten von Informationen als elektronische Auskünfte, Signalisierungen vom Kommunikationsendgerät des rufenden Teilnehmers empfängt und entsprechend auswertet, um Informationen aus einer Datenbank abzufragen und diese per Kurzmitteilung elektronisch an den rufenden Teilnehmer, insbesondere an dessen Kommunikationsendgerät übermittelt.

Die Kurzmitteilungszentrale umfasst vorzugsweise einen SMS (Short Message Service)-Server, der mit der Auskunftsstelle koppelbar ist und Daten austauschen kann, wie beispielsweise über das Protokoll TCP/IP. Insbesondere umfasst der SMS-Server in einer bevorzugten Ausführungsform eine Schnittstelle zum Koppeln mit der Auskunftsstelle und die Möglichkeit, Daten über ein Protokoll wie TCP/IP auszutauschen. Beim Einsatz von TCP/IP ist der SMS-Server mit der Auskunftsstelle über das Internet koppelbar, wodurch eine kostengünstige Implementierung der erfindungsgemäßen Vorrichtung realisierbar ist.

Vorzugsweise ist die Auskunftsstelle ausgebildet, um zusammen mit der Kurzmitteilung zusätzliche Informationen, insbesondere Informationen des Anbieters des erfindungsgemäßen Verfahrens, vorzugsweise Werbeinformationen, zu übertragen. Werbeinformationen können die Kosten für die angebotene Dienstleistung senken; unter Umständen kann dadurch der Dienst sogar kostenlos angeboten werden

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

Die Erfindung wird im folgenden anhand der in den Zeichnungen dargestellten Ausführungsbeispielen näher beschrieben. In der Beschreibung, in den Ansprüchen, der Zusammenfassung und in den Zeichnungen werden die in der hinten angeführten Liste der Bezugszeichen verwendeten Begriffe und zugeordneten Bezugszeichen verwendet. In den Zeichnungen bedeutet:
- Fig. 1: ein Blockschaltbild eines Ausführungsbeispiels der Erfindung und
- Fig. 2: ein Ablaufdiagramm des erfindungsgemäßen Verfahrens.

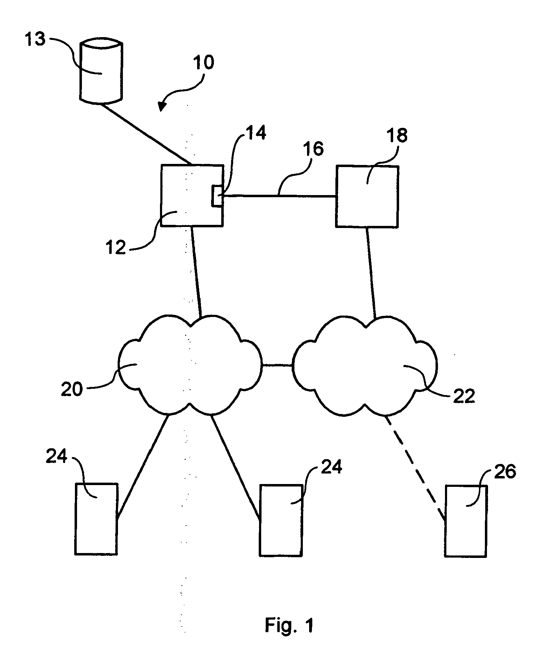

In Fig. 1 ist eine Auskunftsstelle 10, die in einem IN realisiert sein kann, mit einem Auskunfts-Server 12 über ein (Telekommunikations-) Festnetz 20 anrufbar. Die Auskunftsstelle 10 ist insbesondere über mit dem Festnetz 20 verbundene Telefone 24 anrufbar. Der Auskunfts-Server 12 umfasst im wesentlichen einen Computer, der ein Programm ausführt, das folgende Aufgaben wahrnimmt: automatisches Entgegennehmen von Anrufen aus dem Festnetz 20 und Erteilen von Auskünften, die von den Anrufern gewünscht werden.

Bei einem Ruf vom Telefon 24 über das Festnetz 20 nimmt der Auskunfts-Server 12 den Ruf entgegen, indem er eine Verbindung mit dem Telefon 24 herstellt, übermittelt an das rufende Telefon 24 eine automatische Ansage und nimmt nach Ablauf dieser automatischen Ansage Signalisierungen vom Telefon 24 zum Verarbeiten entgegen. Mit den Signalisierungen über das Telefon 24 kann ein Anrufer Informationen vom Auskunfts-Server 12 über Teilnehmer an Telekommunikationsdiensten anfordern. Insbesondere kann der Anrufer die Rufnummern von Anschlüssen der Teilnehmer im Telekommunikationsnetz erfahren. Der Anrufer gibt dazu über das Telefon 24 bestimmte Kodes ein, welche die Signalisierung an den Auskunfts-Server 12 über das Festnetz 20 bewirken. Der Auskunfts-Server 12 ist hierzu derart ausgebildet, dass er die Signalisierungen verarbeitet, indem er die angeforderten Informationen aus einer Datenbank 13 liest. Ferner kann der Auskunfts-Server 12 diese Einstellung speichern, so dass beim nächsten Anruf immer die Kurzmitteilung automatisch übermittelt wird und keine Abfrage mehr erfolgt, die eine Signalisierung erfordert.

Die ermittelten Informationen übermittelt der Auskunfts-Server 12 über eine SMS-Schnittstelle 14 und eine Datenleitung 16 an eine Kurzmitteilungszentrale mit einem SMS-Server 18. Der SMS-Server 18 empfängt vom Auskunfts-Server 12 ferner eine Rufnummer eines Teilnehmeranschlusses im Festnetz 20 oder in einem Mobilnetz 22, an den die Kurzmitteilung bzw. SMS mit den Informationen gesendet werden soll. Der SMS-Server 18 wandelt die übermittelten Informationen in eine SMS um und versendet diese SMS über das Telefonnetz 20 an das Telefon 24 und/oder über das Mobilnetz 22 an ein Mobiltelefon 26, das den Teilnehmeranschluss bildet, an dem die Informationen übermittelt werden sollen.

Der Auskunfts-Server 12 ist nicht nur über das Festnetz 20 und die mit diesem gekoppelten Telefone 24 erreichbar, sondern kann auch von einem Mobiltelefon 26 aus über ein Mobilnetz 22 angerufen werden. Die Auskunft kann bei Bedarf auch nur im Mobilnetz eingerichtet sein. Ein Benutzer kann dadurch direkt eine Rufnummer über sein Mobiltelefon 26 von der Auskunftsstelle 10 anfordern, insbesondere indem er diese in Form einer SMS mit seinem Mobiltelefon 26 bzw. seinem Mobiltelefonanschluss empfängt.

Um dem Benutzer die Eintragung der empfangenen Rufnummer in der SMS in sein elektronisches Telefonbuch im Mobiltelefon 26 zu erleichtern, wird als Ursprung bzw. Absender der SMS die Rufnummer des Teilnehmeranschlusses angegeben. Insbesondere wird die Rufnummer des Hauptanschlusses des Teilnehmers angegeben. Hierdurch kann der Benutzer die Rufnummer des Hauptanschlusses direkt in sein elektronisches Telefonbuch im Mobiltelefon 26 durch Knopfdruck übernehmen.

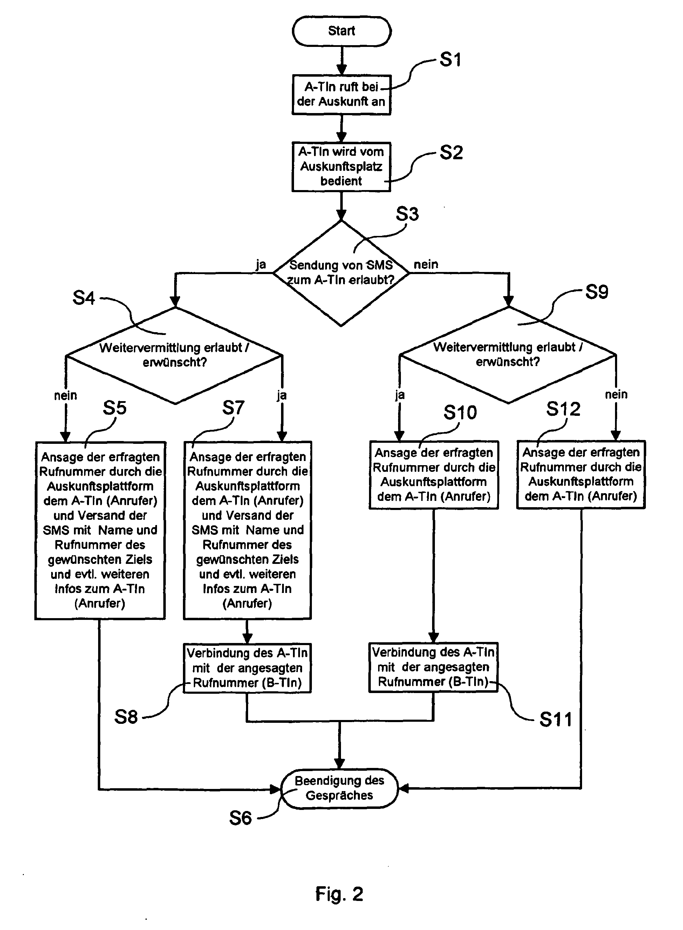

In Fig. 2 ist der Ablauf des erfindungsgemäßen Verfahrens beispielhaft anhand eines Ablaufdiagramms dargestellt. Im Schritt S1 ruft ein Teilnehmer A (A-Tln) bei einer Auskunft bzw. Auskunftsstelle 10 an.

Im Schritt S2 wird der Teilnehmer A von einem Auskunftsplatz in der Auskunftsstelle 10 bedient. Dieser Auskunftsplatz kann eine automatische, computerisierte Bedienung oder auch ein Operator sein.

Im Abfrageschritt S3 wird nach einer entsprechenden Anfrage durch den Teilnehmer A ermittelt, ob es erlaubt ist, die vom Teilnehmer A gewünschten Informationen per SMS bzw. Kurzmitteilung zu erhalten. Ist dies der Fall wird in den Abfrageschritt S4 verzweigt, in dem geprüft wird, ob eine Weitervermittlung von Teilnehmer A erlaubt und/oder erwünscht ist.

Ist dies nicht der Fall, wird in einem Schritt S5 die vom Teilnehmer A erfragte Rufnummer durch die Auskunftsplattform angesagt und es erfolgt ein Versand der angesagten Rufnummer zusammen mit den Namen des Teilnehmers, dem die Rufnummer zugeordnet ist, als SMS an das gewünschte Ziel. Eventuell können noch weitere Informationen an den Teilnehmer A übermittelt werden. Sodann wird in einem Schritt S6 das Gespräch zwischen Auskunft und Teilnehmer A beendet.

Ist dagegen eine Weitervermittlung erlaubt oder erwünscht, wird in den Schritt S7 verzweigt, in dem die von Teilnehmer A erfragte Rufnummer von der Auskunftsplattform angesagt wird und eine SMS mit der Rufnummer und dem Namen des Teilnehmers, dem die Rufnummer zugeordnet ist, an das vom Teilnehmer A gewünschte Ziel übermittelt wird. Sodann wird der Teilnehmer A in einem Schritt S8 mit der bereits per SMS übermittelten Rufnummer des Teilnehmers B verbunden. Dem Schritt S8 folgt der bereits erläuterte Schritt S6.

Wird im Abfrageschritt S3 ermittelt, dass keine Sendungen von Kurzmitteilungen bzw. SMS zum Teilnehmer A erlaubt sind, wird in einen Abfrageschritt S9 verzweigt, in dem wie im Schritt S4 ermittelt wird, ob eine Weitervermittlung erlaubt oder erwünscht ist.

Wird dies bejaht wird in den Schritt S10 verzweigt, der im wesentlichen den Schritt S5 gleicht, ohne dass eine SMS an den Teilnehmer A versandt wird. Dem Schritt S10 folgt der Schritt S11, der dem Schritt S8 entspricht. Dem Schritt S11 folgt der bereits erläuterte Schritt S6.

Ist eine Weitervermittlung weder erlaubt noch erwünscht, wird vom Schritt S9 in einen Schritt S12 verzweigt, in dem die vom Teilnehmer A erfragte Rufnummer durch die Auskunftsplattform lediglich angesagt wird, also akustisch wiedergegeben wird, um dann in den Schritt S6 zu verzweigen, in dem das Gespräch beendet wird.

Die Erfindung zeichnet sich dadurch aus, dass Auskünfte in einem Telekommunikationsnetz komfortabel elektronisch eingeholt werden können. Insbesondere können Informationen wie beispielsweise Rufnummern von Teilnehmern an Telekommunikationsdiensten elektronisch als Kurzmitteilung vorzugsweise mittels eines Kommunikationsendgeräts empfangen und weiterverarbeitet, beispielsweise gespeichert werden.

### Bezugszeichenliste

- 10: Auskunftsstelle
- 12: Auskunfts-Server
- 13: Datenbank
- 14: SMS-Schnittstelle
- 16: Datenleitung
- 18: SMS-Server
- 20: Festnetz
- 22: Mobilnetz
- 24: Festnetz-Telefon
- 26: Mobiltelefon

- S1 - S12: Verfahrensschritte

## Patentansprüche

1. Verfahren zur Abfrage einer Rufnummer eines zweiten Telekommunikationsteilnehmers (B-Tln) aus einer Auskunftsstelle (10) in einem Telekommunikationsnetz, die von einem ersten Telekommunikationsteilnehmer (A-Tln) über ein Kommunikationsendgerät (24, 26) gerufen wird, **dadurch gekennzeichnet, dass** die Rufnummer des zweiten Telekommunikationsteilnehmers (B-Tln) elektronisch als Kurzmitteilung übertragen wird, wobei als Absender der Kurzmitteilung die Rufnummer des zweiten Telekommunikationsteilnehmers (B-Tln) übertragen wird.

2. Verfahren nach Anspruch 1, **dadurch gekennzeichnet, dass** die Kurzmitteilung nach einer Signalisierung durch das Kommunikationsendgerät (24, 26) übertragen wird.

3. Verfahren nach Anspruch 1, **dadurch gekennzeichnet, dass** die Kurzmitteilung automatisch übertragen wird.

4. Verfahren nach einem der Ansprüche 1 bis 3, **dadurch gekennzeichnet, dass** die Kurzmitteilung an einen vorgegebenen Teilnehmeranschluss (24, 26) in einem Telekommunikationsnetz übertragen wird.

5. Verfahren nach Anspruch 4, **dadurch gekennzeichnet, dass** die Kurzmitteilung an den Teilnehmeranschluss (24, 26) des die Auskunftsstelle rufenden Kommunikationsendgeräts übertragen wird.

6. Verfahren nach Anspruch 4 oder 5, **dadurch gekennzeichnet, dass** die Auskunftsstelle INAP-fähig oder in einem Intelligenten Netz realisiert ist und Kurzmitteilungen nur an Teilnehmeranschlüsse überträgt, die von der Auskunftsstelle (10) als freigeschaltet identifiziert werden, indem die Nummer eines Teilnehmeranschlusses, von dem aus die Auskunftsstelle angerufen wird, von der Auskunftsstelle ermittelt und auf Freischaltung überprüft wird.

7. Verfahren nach einem der vorangehenden Ansprüche, **dadurch gekennzeichnet, dass** die Rufnummer aus einer Datenbank (13) mit Teilnehmern an Telekommunikationsdiensten entnommen werden.

8. Verfahren nach einem der vorangehenden Ansprüche, **dadurch gekennzeichnet, dass** neben der Rufnummer auch der Namen des zweiten Telekommunikationsteilnehmers (B-Tln) mittels der Kurzmitteilung übertragen wird.

9. Verfahren nach einem der vorangehenden Ansprüche, **dadurch gekennzeichnet, dass** die Übertragung der Kurzmitteilung abhängig von einem Parameter erfolgt, der mit den Informationen in einer Datenbank (13) gespeichert ist.

10. Verfahren nach einem der vorangehenden Ansprüche, **dadurch gekennzeichnet, dass** die Auskunftsstelle (10) die Informationen an eine Kurzmitteilungszentrale (18) überträgt, welche die Kurzmitteilung erstellt und an einen von der Auskunftsstelle vorgegebenen Teilnehmeranschluss (24, 26) überträgt.

11. Verfahren nach einem der vorangehenden Ansprüche, **dadurch gekennzeichnet, dass** die Auskunftsstelle mit der Kurzmitteilung und zusätzliche Informationen, insbesondere Werbeinformationen, überträgt.

12. Vorrichtung zur Abfrage einer Rufnummer eines zweiten Telekommunikationsteilnehmers (B-Tln) aus einer Auskunftsstelle (10) in einem Telekommunikationsnetz, die von einem ersten Telekommunikationsteilnehmer (A-Tln) über ein Kommunikationsendgerät (24, 26) gerufen wird, **dadurch gekennzeichnet, dass** die Auskunftsstelle (10) derart ausgebildet ist, dass sie die Rufnummer elektronisch als Kurzmitteilung überträgt, wobei die Auskunftsstelle (10) ausgebildet ist, um als Absender der Kurzmitteilung die Rufnummer des zweiten Telekommunikationsteilnehmers (B-Tln) zu übertragen.

13. Vorrichtung nach Anspruch 12, **dadurch gekennzeichnet, dass** die Auskunftsstelle (10) INAP-fähig oder in einem Intelligenten Netz realisiert ist, um eingehende Rufnummern identifizieren und prüfen zu können, ob diese für die Übertragung einer Kurzmitteilung freigeschaltet sind.

14. Vorrichtung nach Anspruch 12 oder 13, **dadurch gekennzeichnet, dass** die Auskunftsstelle (10) ausgebildet ist, um eine Signalisierung durch das Kommunikationsendgerät (24, 26) derart verarbeiten zu können, dass die Kurzmitteilung übertragen wird.

15. Vorrichtung nach Anspruch 14, **dadurch gekennzeichnet, dass** die Auskunftsstelle (10) ausgebildet ist, um eine Signalisierung durch das Kommunikationsendgerät (24, 26) zu speichern.

16. Vorrichtung nach einem der Ansprüche 12 bis 15, **dadurch gekennzeichnet, dass** sie zum Lesen der Rufnummer aus einer Datenbank (13) mit Teilnehmern an Telekommunikationsdiensten ausgebildet ist.

17. Vorrichtung nach einem der Ansprüche 12 bis 16, **dadurch gekennzeichnet, dass** die Kurzmitteilung neben der Rufnummer auch den Namen des zweiten Telekommunikationsteilnehmers (B-Tln)umfasst.

18. Vorrichtung nach einem der Ansprüche 12 bis 17, **dadurch gekennzeichnet, dass** die Auskunftsstelle (10) ausgebildet ist, um die Kurzmitteilung zu einer vorgegebenen E-Mail-Adresse zu übertragen.

19. Vorrichtung nach einem der Ansprüche 12 bis 18, **dadurch gekennzeichnet, dass** die Auskunftsstelle (10, 12) eine Schnittstelle (14) zum Kommunizieren mit einer Kurzmitteilungszentrale (18) umfasst, über die sie die Rufnummer oder die Rufnummer und den Namen überträgt, so dass die Kurzmitteilungszentrale daraus eine Kurzmitteilung erstellt und an einen von der Auskunftsstelle (10, 12) vorgegebenen Teilnehmeranschluß (24, 26) überträgt.

20. Vorrichtung nach Anspruch 19, **dadurch gekennzeichnet, dass** die Auskunftsstelle (10) einen Auskunfts-Server (12) umfasst, der automatisch Anrufe entgegennehmen und Signalisierungen von Kommunikationsendgeräten (24, 26) auswerten kann, um Informationen elektronisch zu übermitteln.

21. Vorrichtung nach Anspruch 19 oder 20, **dadurch gekennzeichnet, dass** die Kurzmitteilungszentrale einen SMS-Server (18) umfasst, der mit der Auskunftsstelle (10, 12) koppelbar ist und Daten austauschen kann, insbesondere über das Protokoll TCP/IP.

22. Vorrichtung nach einem der Ansprüche 12 bis 21, **dadurch gekennzeichnet, dass** die Auskunftsstelle ausgebildet ist, um mit der Kurzmitteilung zusätzliche Informationen, insbesondere Werbeinformationen, zu übertragen.

## Claims

1. Method for querying a subscriber number of a second telecommunications subscriber (B-Tln) from a directory information center (10) in a telecommunications network, called by a first telecommunications subscriber (A-Tln) using a communications terminal (24, 26), **characterized in that** the subscriber number of the second telecommunications subscriber (B-Tln) is transmitted electronically as a short message, with the subscriber number of the second telecommunications subscriber (B-Tln) being transmitted as the sender of the short message.

2. Method according to claim 1, **characterized in that** the short message is transmitted subsequent to signaling by the communications terminal (24, 26).

3. Method according to claim 1, **characterized in that** the short message is transmitted automatically.

4. Method according to any one of claims 1 through 3, **characterized in that** the short message is transmitted to a predetermined subscriber connection (24, 26) in a telecommunications network.

5. Method according to claim 4, **characterized in that** the short message is transmitted to the subscriber connection (24, 26) of the communications terminal calling the directory information center.

6. Method according to claim 4 or 5, **characterized in that** the directory information center is INAP-capable or is implemented in an intelligent network, and transmits short messages only to subscriber connections that are identified by the directory information center (10) as activated, **in that** the number of a subscriber connection from which the directory information center is called is identified by the directory information center and checked for activated status.

7. Method according to any one of the preceding claims, **characterized in that** the subscriber numbers are taken from a database (13) with subscribers to telecommunications services.

8. Method according to any one of the preceding claims, **characterized in that**, in addition to the subscriber number, the name of the second telecommunications subscriber (B-Tln) is also transmitted by means of the short message.

9. Method according to any one of the preceding claims, **characterized in that** the transmission of the short message takes place as a function of a parameter that is stored with the information in a database (13).

10. Method according to any one of the preceding claims, **characterized in that** the directory information center (10) transmits the information to a short message center (18), which generates the short message and transmits it to a subscriber connection (24, 26) specified by the directory information center.

11. Method according to any one of the preceding claims, **characterized in that** the directory information center transmits additional information, in particular advertising information, with the short message.

12. Apparatus for querying a subscriber number of a second telecommunications subscriber (B-Tln) from a directory information center (10) in a telecommunications network, called by a first telecommunications subscriber (A-Tln) using a communications terminal (24, 26), **characterized in that** the directory information center (10) is designed such that it electronically transmits the subscriber number as a short message, wherein the directory information center (10) is designed to transmit the subscriber number of the second telecommunications subscriber (B-Tln) as the sender of the short message.

13. Apparatus according to claim 12, **characterized in that** the directory information center (10) is INAP-capable or is implemented in an intelligent network in order to be able to identify incoming subscriber numbers and check whether they are activated for transmission of a short message.

14. Apparatus according to claim 12 or 13, **characterized in that** the directory information center (10) is designed to be able to process signaling by the communications terminal (24, 26) such that the short message is transmitted.

15. Apparatus according to claim 14, **characterized in that** the directory information center (10) is designed to store signaling by the communications terminal (24, 26).

16. Apparatus according to any one of claims 12 through 15, **characterized in that** it is designed to read the subscriber number from a database (13) with subscribers to telecommunications services.

17. Apparatus according to any one of claims 12 through 16, **characterized in that** the short message also contains the name of the second telecommunications subscriber (B-Tln) in addition to the subscriber number.

18. Apparatus according to any one of claims 12 through 17, **characterized in that** the directory information center (10) is designed to transmit the short message to a predefined e-mail address.

19. Apparatus according to any one of claims 12 through 18, **characterized in that** the directory information center (10, 12) includes an interface (14) for communicating with a short message center (18), through which it transmits the subscriber number or the subscriber number and name, so that the short message center generates a short message therefrom and transmits it to a subscriber connection (24, 26) specified by the directory information center (10, 12).

20. Apparatus according to claim 19, **characterized in that** the directory information center (10) includes a directory information server (12) that can automatically accept calls and evaluate signaling from communications terminals (24, 26) in order to electronically transmit information.

21. Apparatus according to claim 19 or 20, **characterized in that** the short message center includes an SMS server (18) that can be coupled to the directory information center (10, 12) and can exchange data, in particular using the TCP/IP protocol.

22. Apparatus according to any one of claims 12 through 21, **characterized in that** the directory information center is designed to transmit additional information, in particular advertising information, with the short message.

## Revendications

1. Procédé de recherche d'un numéro d'appel d'un deuxième abonné de télécommunication (abonné B) auprès d'un service de renseignement (10) d'un réseau de télécommunication appelé par un premier abonné de télécommunication (abonné A) par l'intermédiaire d'un terminal de télécommunication (24, 26), **caractérisé en ce que** le numéro d'appel du deuxième abonné de télécommunication (abonné B) est transmis par voie électronique sous la forme d'un message court, le numéro d'appel du deuxième abonné de télécommunication (abonné B) étant transmis comme expéditeur du message court.

2. Procédé selon la revendication 1, **caractérisé en ce que** le message court est transmis après une signalisation par le terminal de communication (24, 26).

3. Procédé selon la revendication 1, **caractérisé en ce que** le message court est transmis automatiquement.

4. Procédé selon l'une des revendications 1 à 3, **caractérisé en ce que** le message court est transmis à une boucle locale (24, 26) prédéterminée d'un réseau de télécommunication.

5. Procédé selon la revendication 4, **caractérisé en ce que** le message court est transmis à la boucle locale (24, 26) du terminal de communication appelant le service de renseignement.

6. Procédé selon la revendication 4 ou 5, **caractérisé en ce que** le service de renseignement est compatible INAP ou réalisé dans un réseau intelligent et ne transmet des messages courts qu'aux boucles locales identifiées comme étant connectées par le service de renseignement (10), ce dernier recherchant le numéro d'une boucle locale à partir de laquelle le service de renseignement est appelé et vérifie si cette boucle est connectée.

7. Procédé selon l'une des revendications précédentes, **caractérisé en ce que** le numéro d'appel est extrait d'une base de données (13) d'abonnés à des services de télécommunication.

8. Procédé selon l'une des revendications précédentes, **caractérisé en ce que**, outre le numéro d'appel, le nom du deuxième abonné de télécommunication (abonné B) est transmis par le message court.

9. Procédé selon l'une des revendications précédentes, **caractérisé en ce que** la transmission du message court s'effectue en fonction d'un paramètre enregistré avec les informations dans une base de données (13).

10. Procédé selon l'une des revendications précédentes, **caractérisé en ce que** le service de renseignement (10) transmet les informations à un centre de messages courts (18) qui crée le message court et le transmet à une boucle locale (24, 26) prédéterminée par le service de renseignement.

11. Procédé selon l'une des revendications précédentes, **caractérisé en ce que** le service de renseignement transmet, avec le message court, des informations supplémentaires, notamment des informations publicitaires.

12. Dispositif de recherche d'un numéro d'appel d'un deuxième abonné de télécommunication (abonné B) auprès d'un service de renseignement (10) d'un réseau de télécommunication appelé par un premier abonné de télécommunication (abonné A) par l'intermédiaire d'un terminal de télécommunication (24, 26), **caractérisé en ce que** le centre de renseignement (10) est conçu de manière à transmettre le numéro d'appel par voie électronique sous forme de message court, le numéro d'appel du deuxième abonné de télécommunication (abonné B) étant transmis comme expéditeur du message court.

13. Dispositif selon la revendication 12, **caractérisé en ce que** le service de renseignement (10) est compatible INAP ou réalisé dans un réseau intelligent afin de pouvoir identifier des numéros d'appels entrants et vérifier s'ils sont connectés pour la transmission d'un message court.

14. Dispositif selon la revendication 12 ou 13, **caractérisé en ce que** le service de renseignement (10) est conçu pour pouvoir traiter une signalisation du terminal de communication (24, 26) de manière que le message court soit transmis.

15. Dispositif selon la revendication 14, **caractérisé en ce que** le service de renseignement (10) est conçu pour enregistrer une signalisation du terminal de communication (24, 26).

16. Dispositif selon l'une des revendications 12 à 15, **caractérisé en ce qu'**il est conçu pour pouvoir lire les numéros d'appel dans une base de données (13) d'abonnés à des services de télécommunication.

17. Dispositif selon l'une des revendications 12 à 16, **caractérisé en ce que**, outre le numéro d'appel, le message court comprend également le nom du deuxième abonné de télécommunication (abonné B).

18. Dispositif selon l'une des revendications 12 à 17, **caractérisé en ce que** le service de renseignement (10) est conçu pour transmettre le message court à une adresse de courrier électronique prédéterminée.

19. Dispositif selon l'une des revendications 12 à 18, **caractérisé en ce que** le service de renseignement (10, 12) comprend une interface (14) pour communiquer avec un centre de messages courts (18) par l'intermédiaire de laquelle il transmet le numéro d'appel ou le numéro d'appel accompagné du nom, de manière que le centre de messages courts crée un message court à partir de ces renseignements et le transmette à une boucle locale (24, 26) prédéterminée par le service de renseignement (10, 12).

20. Dispositif selon la revendication 19, **caractérisé en ce que** le service de renseignement (10) comprend un serveur de renseignement (12) apte à recevoir automatiquement des appels et à analyser des signalisations de terminaux de communication (24, 26) afin de transmettre des informations par voie électronique.

21. Dispositif selon la revendication 19 ou 20, **caractérisé en ce que** le centre de messages courts comprend un serveur SMS (18) apte à être couplé avec le service de renseignement (10, 12) et à échanger des données avec ce dernier, notamment par l'intermédiaire du protocole TCP/IP.

22. Dispositif selon l'une des revendications 12 à 21, **caractérisé en ce que** le service de renseignement est conçu pour transmettre, avec le message court, des informations supplémentaires, notamment des informations publicitaires.
